# EUROPÄISCHE PATENTSCHRIFT

(11) **EP 1 321 049 B1**
(45) Veröffentlichungstag und Bekanntmachung des Hinweises auf die Patenterteilung: **12.10.2005**
(21) Anmeldenummer: 01130429.2
(22) Anmeldetag: 20.12.2001
(51) Int. Cl.: A24C 5/34, G01N 22/04, B65B 19/02

(54) **Verfahren und Vorrichtung zur Messung des Feuchtigkeitsgrades von Zigaretten vor dem Verpacken**
Method and device for measuring the moisture of cigarettes before packing them
Méthode et appareil de mesure d'humidité de cigarettes avant l'empaquetage

(43) Veröffentlichungstag der Anmeldung: 25.06.2003
(73) Patentinhaber: TEWS ELEKTRONIK Dipl.-Ing. Manfred Tews, 22459 Hamburg (DE)
(72) Erfinder: Tews, Manfred, Dipl.-Ing., 22459 Hamburg (DE); Herrmann, Rainer, Dipl.-Ing., 20253 Hamburg (DE)
(74) Vertreter: Glawe, Delfs, Moll

(56) Entgegenhaltungen:
- EP-A- 0 889 321
- GB-A- 1 376 747
- US-A- 5 044 379
- BOURDEL E ET AL: "MEASUREMENT OF THE MOISTURE CONTENT WITH A CYLINDRICAL RESONATING CAVITY IN TM010 MODE" IEEE TRANSACTIONS ON INSTRUMENTATION AND MEASUREMENT, IEEE INC. NEW YORK, US, Bd. 49, Nr. 5, Oktober 2000 (2000-10), Seiten 1023-1028, XP000963755 ISSN: 0018-9456
- BOLTZE T: "A microwave model for moisture determination in bulk materials and a maximum likelihood estimation algorithm" MICROWAVE SYMPOSIUM DIGEST, 1995., IEEE MTT-S INTERNATIONAL ORLANDO, FL, USA 16-20 MAY 1995, NEW YORK, NY, USA,IEEE, US, 16. Mai 1995 (1995-05-16), Seiten 1023-1026, XP010141437 ISBN: 0-7803-2581-8

## Beschreibung

*Die Erfindung betrifft ein Verfahren zum Messen der Feuchte von Zigaretten und eine Vorrichtung zur Durchführung des Verfahrens.*

Bei der Herstellung, dem Verpacken und dem Genuß von Zigaretten kommt es ganz entscheidend auf deren Feuchte an. Der Tabak von Zigaretten sollte ungefähr 12 bis 13 Gew.-% Wasser enthalten. Bei der Herstellung der Zigaretten ist diese Feuchte optimal, da dann der Tabak die maximale Elastizität hat. Beim Genuß der Zigarette ist ebenfalls dieser Feuchtigkeitsgehalt wesentlich. Ist der Tabak zu feucht, so können sich auf dem Papier unansehnliche dunkle Flecken bilden. Ist der Feuchtigkeitsgehalt zu gering, so schmeckt die Zigarette unangenehm rauchig und "kratzt im Hals".

Bei der Herstellung der Zigaretten wird daher darauf geachtet, daß die Zigaretten eine optimale Feuchte von ungefähr 12 bis 13 Gew.-% aufweisen. Werden die Zigaretten mit dieser Feuchte in den handelsüblichen Packungen verpackt, in denen die Zigaretten durch eine metallbeschichtete Folie, eine Papierumhüllung und eine äußere Kunststoffumhüllung eingeschlossen sind, halten die Zigaretten über längere Zeit die Feuchtigkeit, die beim Genuß derselben erwünscht wird. Dies ist sowohl bei sehr trockener Lagerung der Packung der Fall als auch bei der Lagerung in feuchten Räumen oder bei feuchtem Klima. Im Fall der trockenen Lagerung kann die in den Zigaretten enthaltene Feuchte schlecht entweichen. Im Falle der sehr feuchten Lagerung kann die äußere Feuchtigkeit nur sehr langsam in die Packung eindringen. Es ist also wesentlich, daß die Zigaretten in die Verpackung mit der idealen Feuchte von ungefähr 12 bis 13 Gew.-% eingebracht werden.

Dies ist aber nicht nur für den Genuß der Zigarette wesentlich. Ist die Zigarette nämlich beim Verpacken zu trocken, so zerbröselt der Tabak beim Verpacken, und die Zigaretten weisen nicht mehr die gesamte Tabakmenge auf. Daß die Zigaretten beim Verpacken eine zu geringe Feuchte haben, obwohl sie bei der Herstellung die richtige Feuchte hatten, kann auf einer zu langen Zwischenlagerung beruhen. Werden die Zigaretten in einer kontinuierlichen Produktionslinie von der Zigaretten-Herstellungsmaschine direkt zur Verpackungsmaschine geleitet, so können Betriebsunterbrechungen auftreten, wenn Maschinen repariert oder gewartet werden müssen. Die zwischen der Zigarettenherstellungsmaschine und der Verpackungsmaschine unter Umständen für Stunden verweilenden Zigaretten trocknen dann aus. In vielen anderen Fällen werden die Zigaretten von den Zigarettenherstellungsmaschinen zunächst in Schragen gesammelt, mit denen sie dann zu den Verpackungsmaschinen verbracht werden. Diese Schragen stehen möglicherweise einige Stunden nach der Herstellung der Zigaretten herum, bis sie zu der Verpackungsmaschine gebracht werden. Auch in diesem Falle trocknet der Tabak abhängig vom Raumklima in den meisten Fällen aus.

Es ist daher unbedingt erforderlich, die Feuchte der Zigaretten vor dem Verpacken zu kontrollieren. Dies geschieht bisher labormäßig. Wird festgestellt, daß die Feuchte zu gering ist, so werden die entsprechenden Zigaretten der Maschine entnommen, um den Tabak zurückzugewinnen. Das Problem besteht aber darin, daß eine konventionelle Labormessung, bei der im wesentlichen im Trockenofen die Menge des austretenden Wassers bestimmt wird, je nach Verfahren zwischen einer und 16 Stunden dauert. In dieser Zeit ist aber schon eine sehr große Zahl von Zigaretten verpackt worden, da die bekannten Maschinen ungefähr 5.000 bis 9.000 Zigaretten pro Minute liefern. Es muß dann eine große Anzahl von Verpackungen geöffnet werden, um den Tabak zurückzugewinnen, wenn man vermeiden will, daß Packungen mit minderer Qualität ausgeliefert werden.

Um die damit verbundenen Probleme zu vermeiden, ist versucht worden, die Feuchtigkeit mit Infrarotmessung vor dem Eintreten der Zigaretten in die Verpackungsmaschine zu messen. Der Nachteil der Infrarotmessung ist aber, daß sie ein Oberflächenmeßverfahren ist. Die Eindringtiefe der Infrarotstrahlen beträgt nur 5 bis 6 µm. Von der Oberflächenfeuchtigkeit, die sich z. B. bei trockenen Luftströmungen sehr schnell ändern kann, können aber keine zuverlässigen Schlüsse auf die Feuchtigkeit im Innern der Zigarette gezogen werden. Im Falle eines trockenen Luftzugs ist es durchaus möglich, daß die Oberflächenfeuchte sehr stark abnimmt, obwohl die Gesamtfeuchte der Zigarette sich kaum geändert hat.

Bei einem Verfahren der eingangs genannten Art wird die Feuchte der Zigaretten mit Hilfe eines Mikrowellenresonators gemessen (EP 0 889 321 A1). Zu diesem Zweck wird der Zigarettenstrang durch eine röhrenförmige Durchgangsöffnung eines Mikrowellenresonators geführt. Mit dieser Vorrichtung kann die Feuchte eines Zigarettenstrangs oder einzelner aufeinanderfolgender Zigaretten gemessen werden. *Mikrowellen haben eine wesentlich größere Eindringtiefe, als die oben erwähnten Infrarotstrahlen.* Man kann im Wesentlichen das ganze Tabakvolumen bzw. zumindest einen wesentlichen Teil des Tabakvolumens bei der Messung erfassen. Die Feuchte (und ggf. auch die Dichte des Tabakmaterials) kann dabei durch Änderungen des Mikrowellenfeldes im Mikrowellen-Sensor, insbesondere durch die Verschiebung der Resonanzfrequenz eines Mikrowellen-Resonators und die Veränderung der Breite der Resonanzkurve bestimmt werden (EP 0 468 023 B1)

Erfindungsgemäß werden die Zigaretten nebeneinander- und übereinanderliegend senkrecht zu ihrer Längserstreckung zur Packmaschine gefördert. Dabei kann an der seitlichen Begrenzung des Förderwegs, an dem die Brandenden der Zigaretten angeordnet sind, ein Planarsensor angeordnet sein. Die Anordnung des Planarsensors kann auch so gewählt werden, daß die Zigaretten sich in ihrer ganzen Länge quer durch das Meßfeld bewegen, ohne daß der Filterbereich ins Meßfeld gelangt, insbesondere wenn der Sensor oberhalb oder unterhalb der Zigaretten angeordnet ist. Ein solcher Planarsensor (EP 0 908 718 A) ist ein Mikrowellen-Sensor, mit dem die Feuchte und/oder Dichte eines Materials gemessen werden kann, das sich vor seiner ebenen Meßfläche befindet.

Bei einem anderen erfindungsgemäßen Verfahren wird nur die Feuchte eines Teilstroms von Zigaretten gemessen, die senkrecht zu ihrer Längsachse durch ein schlitzförmiges Meßvolumen gefördert werden. Dabei wird die Messung gleichzeitig nicht mehr bei allen vorbeiströmenden Zigaretten, sondern nur bei mehreren hinter- bzw. nebeneinanderliegenden Zigaretten durchgeführt, die sich gerade im schlitzförmigen Meßvolumen befinden. Falls dieser Teilstrom nicht gerade an einer sehr ungünstigen Stelle (z. B. am Rand) abgezweigt wird, ergeben diese Messungen einen repräsentativen Wert für die Feuchte aller Zigaretten.

Wie dies bereits erwähnt wurde, soll mit dem erfindungsgemäßen Verfahren die Feuchte der Zigaretten bzw. des Tabaks gemessen werden. Es ist aber durchaus möglich, auch die Dichte des Tabaks zu bestimmen.

Eine Vorrichtung zur Durchführung des Verfahrens zeichnet sich dadurch aus, daß sie einen Förderer, mit dem die Zigaretten nebeneinander- und übereinanderliegend senkrecht zu ihrer Längserstreckung gefördert werden, und einen Mikrowellen-Planarsensor aufweist, dessen Sensorfläche parallel zur Förderrichtung der Zigaretten ausgerichtet an einer seitlichen Begrenzung des Förderers angeordnet ist. Der Planarsensor wird dabei auf der Seite des Zigarettenförderers angeordnet, auf der sich das Brandende der Zigaretten befindet, so die Mikrowellen von dieser Seite her in den Tabak eindringen können und so die Feuchte bestimmt wird. Der Planarsensor kann auch so angeordnet werden, daß die Zigaretten sich in ihrer ganzen Länge, mit Ausnahme des Filters, quer durch das Meßfeld bewegen. Die Eindringtiefe kann dabei durch Wahl der Resonanzbedingungen festgelegt werden. Diese Resonanzbedingungen werden einerseits durch die Geometrie des Planarsensors, durch die dielektrische Konstante des Dielektrikums im Planarsensor und die Mikrowellenfrequenz bestimmt. Zweckmäßig sind hier Mikrowellenfrequenzen von 1 bis 10 GHz, insbesondere 2 bis 5 GHz und ganz besonders vorteilhaft 2 bis 3 GHz.

Obwohl eine Eindringtiefe von 5 cm besonders zweckmäßig ist, können durchaus Eindringtiefen bis zu 10 cm erreicht werden. Dies ist aber im allgemeinen nicht erforderlich, da z. B. eine Kingsize-Zigarette 63 mm Tabaklänge und 21 mm Filterlänge aufweist und die Feuchtigkeit im Filter selbstverständlich nicht bestimmt werden muß.

Eine andere Vorrichtung der Erfindung zeichnet sich dadurch aus, daß sie einen Mikrowellen-Sensor mit einem schlitzförmigen Meßvolumen aufweist, durch das ein Teilstrom von nebeneinanderliegenden Zigaretten in einer Richtung hindurchleitbar ist, die senkrecht zur Längserstreckung der Zigaretten ist. Insbesondere kann das schlitzförmige Meßvolumen eine Breite aufweisen, die etwas größer ist als der Durchmesser der Zigaretten, so daß nur eine Reihe von hinter- oder nebeneinanderliegenden Zigaretten hindurch geleitet wird. Der Mikrowellen-Sensor kann dabei zwei beabstandete halbzylinderförmige Resonatorhälften aufweisen, die zwischen sich den Schlitz einschließen. Ein solcher Resonator ist für Feuchte- und Dichtemessungen bekannt (EP 0 468 023 B1, Fig. 13). Dabei hat das Meßvolumen vorteilhafterweise im wesentlichen die Länge des Tabakstrangs einer Zigarette. Der Filter befindet sich dann außerhalb des Meßvolumens, so daß die Feuchte tatsächlich nur im Tabakstrang bestimmt wird.

Durch die erfindungsgemäße Vorrichtung und das erfindungsgemäße Verfahren wird zweckmäßigerweise kontrolliert, daß sich die Feuchte des Tabaks zwischen oberen und unteren Grenzwerten bewegt. Diese Feuchte kann sehr genau bestimmt werden, da das Zigarettenpapier keinen wesentlichen Einfluß auf das Signal hat. Der Einfluß des Filtermaterials ist dabei selbstverständlich null, weil sich das Filtermaterial bei der Messung außerhalb des Meßvolumens befindet. Die Feuchtekalibration ist von der Zigarettensorte, vom Blend, der Tabakfarbe, der Saucierung, dem Casing, dem Anteil am Rippenschnitt oder expandiertem Tabak völlig unabhängig, muß also bei Sortenwechsel nicht geändert werden. Die Vorrichtung ist nahezu wartungsfrei. Es ist lediglich von Zeit zu Zeit bei leerem Resonator ein Nullpunktsabgleich durchzuführen.

Zusammenfassend kann also festgestellt werden, daß durch das erfindungsgemäße Verfahren und die erfindungsgemäße Vorrichtung eine Verringerung der Feuchte festgestellt werden kann, so daß die Maschine rechtzeitig auf die Verminderung der Qualität reagieren kann. Dieses Absinken der Feuchte kann beruhen auf:
- An- und Abfahrprozesse von Trocknern in der Tabakaufbereitung und ungenügender Feuchteausgleich in den Ausgleichsboxen;
- Stillstandzeiten auf den Zigarettenförderbändern zwischen Zigarettenmaschine und Packer;
- zu lange Aufenthaltszeiten von Zigaretten in Puffern und Zigarettenspeichern vor dem Packer;
- zu lange Aufbewahrung von fertig produzierten Zigaretten in offenen Schragen.

Die Erfindung wird im folgenden anhand von vorteilhaften Ausführungsformen unter Bezugnahme auf die beigefügten Zeichnungen bspw. beschrieben. Es zeigen in schematischer Ansicht:
- Fig. 1: eine erste Ausführungsform der Erfindung von oben gesehen;
- Fig. 2: eine zweite Ausführungsform der Erfindung von der Seite gesehen; und
- Fig. 3: die Ausführungsform der Fig. 2 von oben.

Durch die in den Figuren gezeigten Vorrichtungen wird die Möglichkeit der Ausschleusung von Zigaretten aus dem normalen Abpackprozeß geschaffen, deren Feuchte zu stark von der Zielfeuchte abweicht. Diese Zigaretten können anschließend normal recycliert werden, um den Tabakanteil wiederzuverwenden.

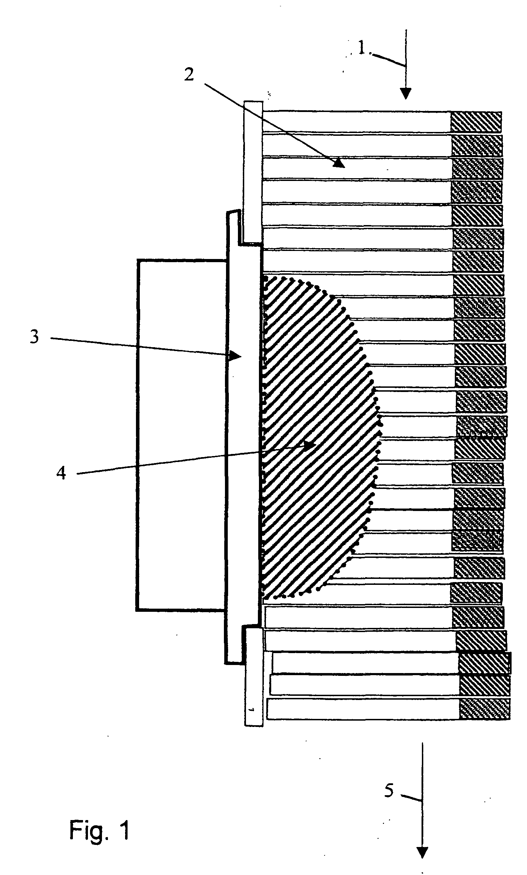

Bei der Ausführungsform der Fig. 1 wird ein Planarsensor verwendet. Die Zigaretten 2 sind übereinander und hintereinander angeordnet und bewegen sich in Richtung des Pfeiles 1 an einem Mikrowellen-Planarsensor 3 vorbei, der am Brandende der Zigaretten 2 angeordnet ist. Das Mikrowellenmeßfeld des Planarsensors 3 ist mit 4 bezeichnet. Wie man sieht, reicht es im wesentlichen in den Tabakanteil hinein. Die genaue Ausdehnung hängt dabei von der Wahl des Planarsensors sowie der Mikrowellenfrequenz ab. Zweckmäßigerweise wird man das Mikrowellenmeßfeld aber nur so weit eindringen lassen, daß es nicht bis zu den Filtern reicht, die rechts schraffiert angedeutet sind. Der Vorteil dieser Vorrichtung besteht in der sehr einfachen Einbau- und Integrationsmöglichkeit in bestehende Anlagen sowie in der besonderen Gewichtung der von der Austrocknung besonders betroffenen Zigarettenseite am Brandende. Es ist aber auch möglich, den Planarsensor so anzuordnen, daß sich die Zigaretten in ihrer ganzen Länge mit Ausnahme des Filters, quer durch das Meßfeld bewegen. Der Resonator könnte also oberhalb oder unterhalb der Zigaretten angeordnet sein, wobei seine Meßoberfläche parallel zur Längserstreckung der einzelnen Zigaretten und parallel zur Bewegungsrichtung derselben ausgerichtet wäre. Die Meßoberfläche wäre dann etwa dort angeordnet, wo sich in Fig. 1 die schraffierte Fläche 4 befindet bzw. ganz bis an die Filter heranreichen. Aus diesen Werten kann dann sehr zuverlässig auf die Gesamtfeuchte des Tabaks geschlossen werden.

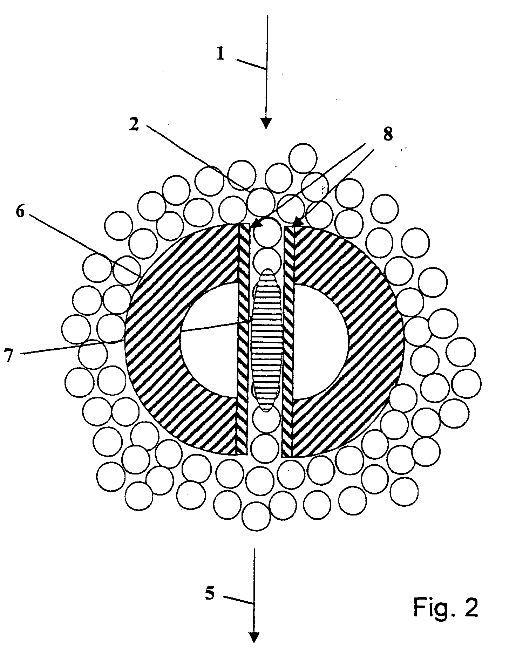

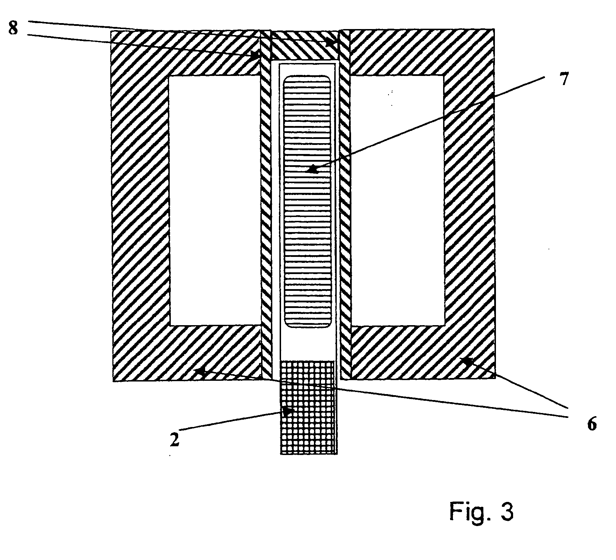

Wenn der Anwender genaue Kenntnis über den Feuchtemittelwert über die gesamte Zigarette haben will, wie er sich als Ausgleichsfeuchte später in der Packung einstellt, so ist auch die Vorrichtung der Fig. 2 und 3 geeignet. Diese Vorrichtung, die in der Fig. 2 von der Seite gezeigt ist, weist einen Mikrowellen-Gabelsensor mit homogenem Mikrowellenmeßfeld 7 in Zigarettenrichtung aus. Der Mikrowellen-Gabelsensor besteht aus zwei Halbzylinderresonatoren, deren offene Seiten durch Kunststoff-Probenführungen 8 abgeschlossen sind, zwischen denen sich die Zigaretten mit einer Schichtdicke von einer Zigarette aneinanderliegend in Richtung der Pfeile 1 und 5 hindurch bewegen. Fig. 3 zeigt den Mikrowellen-Sensor von oben. Man erkennt, daß sich der schraffiert gezeigte Filter der Zigarette 2 außerhalb des Meßraumes 7 befindet.

Wird dieser Sensor in den Weg der Zigaretten unmittelbar vor dem Packereingang eingebaut, so kann sich immer eine Zigarettenreihe formen, deren Feuchte gemessen wird. Dabei ist, wie dies in Fig. 3 gezeigt ist, der Sensor so ausgebildet, daß die Filterseite aus dem Meßfeld herausragt und damit nicht gemessen wird. Der Mikrowellen-Resonator besteht aus einem E₀₁₀-Grundmodus angeregten kreiszylindrischen Resonator, der in Richtung der Zylinderachse, also in Richtung der Wandströme so in zwei Hälften aufgeschnitten wurde, daß die Feldverteilung kaum verändert wird. Dieser Resonator hat die bemerkenswerte Eigenschaft, daß das Meßfeld im Längsspalt für die Probe in Richtung der Zylinderachse wie auch quer zum Schlitz sehr homogen ist. Wenn die Zigaretten also in Richtung der Zylinderachsen ausgerichtet sind, wird die Feuchte über die Länge der Zigarette mit gleicher Gewichtung gemessen. Damit gibt der Meßwert die Ausgleichsfeuchte wieder, die die Zigarette in der Packung einnehmen wird. Die Zahl der Zigaretten, die auf diese Weise erfaßt werden können, reduziert sich allerdings. Dies ist aber nicht nachteilig, wenn dem Produktstrom von Zigaretten ein repräsentativer Teilstrom entnommen und gemessen wird.

## Patentansprüche

1. Verfahren zum Messen der Feuchte von Zigaretten vor dem Verpacken mit Hilfe eines Mikrowellen-Resonators unter Verwendung der Verschiebung der Resonanzfrequenz und der Veränderung der Breite der Resonanzkurve des Resonators, **dadurch gekennzeichnet, dass** die Zigaretten nebeneinander oder neben- und übereinander liegend senkrecht zu ihrer Längserstreckung durch das Mikrowellenfeld des Resonators geführt werden.

2. Verfahren nach Anspruch 1, **dadurch gekennzeichnet, dass** die Feuchte zumindest eines wesentlichen Teils der Zigaretten gemessen wird, indem die Messung mit einem Planarsensor von der Brandendseite der eng neben- und übereinanderliegenden Zigaretten erfolgt.

3. Verfahren nach Anspruch 1, **dadurch gekennzeichnet, dass** die Feuchte zumindest eines wesentlichen Teils der Zigaretten gemessen wird, indem die Messung mit einem Planarsensor erfolgt, dessen Messoberfläche parallel zu den Längsachsen der Zigaretten und zur Bewegungsrichtung derselben ist.

4. Verfahren nach Anspruch 1, **dadurch gekennzeichnet, dass** nur die Feuchte eines Teilstroms von Zigaretten gemessen wird, die senkrecht zu ihrer Längsachse durch ein schlitzförmiges Messvolumen des Resonators gefördert werden.

5. Verfahren nach einem der Ansprüche 1 bis 4, **dadurch gekennzeichnet, dass** auch die Packungsdichte des Tabaks innerhalb der Zigarette gemessen wird.

6. Vorrichtung zur Durchführung des Verfahrens nach einem der Ansprüche 1 bis 5, **dadurch gekennzeichnet, dass** sie einen Mikrowellen-Resonator und einen Förderer zur Förderung der Zigaretten (2) nebeneinander oder neben- und übereinanderliegend senkrecht zu ihrer Längserstreckung durch das Mikrowellenfeld des Resonators aufweist.

7. Vorrichtung nach Anspruch 6, **dadurch gekennzeichnet, dass** sie einen Mikrowellen-Planarsensor (3) aufweist, dessen Sensorfläche parallel zur Förderrichtung (1,5) der Zigaretten (2) ausgerichtet an einer seitlichen Begrenzung des Förderers angeordnet ist.

8. Vorrichtung nach Anspruch 6, **dadurch gekennzeichnet, dass** sie einen Mikrowellen-Planarsensor (3) aufweist, dessen Sensorfläche parallel zur Förderrichtung (1, 5) der Zigaretten (2) und parallel zu den Längsachsen der Zigaretten (2) ausgerichtet ist.

9. Vorrichtung nach Anspruch 7, **dadurch gekennzeichnet, dass** sich das aktive Messvolumen (4) des Mikrowellen-Planarsensors (3) ungefähr 5 cm in die Zigaretten (2) hinein erstreckt.

10. Vorrichtung nach Anspruch 6, **dadurch gekennzeichnet, dass** der Mikrowellen-Resonator (6) ein schlitzförmiges Messvolumen (7) aufweist, durch das ein Teilstrom von nebeneinanderliegenden Zigaretten (2) in einer Richtung (1,5) hindurchleitbar ist, die senkrecht zur Längserstreckung der Zigaretten (2) ist.

11. Vorrichtung nach Anspruch 10, **dadurch gekennzeichnet, dass** das schlitzförmige Messvolumen (7) eine Breite aufweist, die etwas größer ist als der Durchmesser der Zigaretten (2).

12. Vorrichtung nach Anspruch 10 oder 11, **dadurch gekennzeichnet, dass** der Mikrowellen-Resonator (6) zwei beabstandete halbzylinderförmige Resonatoren aufweist, die zwischen sich den Schlitz (7) einschließen.

13. Vorrichtung nach einem der Ansprüche 10 bis 12, **dadurch gekennzeichnet, dass** das Messvolumen (7) in Richtung der Längsachsen der Zigaretten (2) im wesentlichen die Länge des Tabakstrangs einer Zigarette hat.

## Claims

1. A process for measuring the moisture in cigarettes before they are packed, with the aid of a microwave resonator using the shift in the resonance frequency and the change in the width of the resonance curve of the resonator, **characterised in that** the cigarettes are guided through the microwave field of the resonator perpendicularly to their longitudinal extent and lying next to one another or next to one another and on top of one another.

2. A process according to Claim 1, **characterised in that** the moisture of at least a substantial number of the cigarettes is measured, whereby a planar sensor is used to take the measurement from the burning end of the cigarettes lying closely next to one another or on top of one another.

3. A process according to Claim 1, **characterised in that** the moisture of at least a substantial number of the cigarettes is measured, whereby the measurement is taken using a planar sensor whereof the measuring surface is parallel to the longitudinal axes of the cigarettes and to the movement direction thereof.

4. A process according to Claim 1, **characterised in that** only the moisture of a partial stream of cigarettes which are delivered perpendicularly to their longitudinal axis through a slot-shaped measuring volume of the resonator is measured.

5. A process according to one of Claims 1 to 4, **characterised in that** the packing density of the tobacco within the cigarette is also measured.

6. A device for carrying out the process according to one of Claims 1 to 5, **characterised in that** it has a microwave resonator and a conveyor for conveying the cigarettes (2) through the microwave field of the resonator perpendicularly to their longitudinal extent and lying next to one another or next to one another and on top of one another.

7. A device according to Claim 6, **characterised in that** it has a microwave planar sensor (3) whereof the sensor face is arranged on a lateral boundary of the conveyor in parallel alignment with the conveying direction (1, 5) of the cigarettes (2).

8. A device according to Claim 6, **characterised in that** it has a microwave planar sensor (3) whereof the sensor face is aligned parallel to the conveying direction (1, 5) of the cigarettes (2) and parallel to the longitudinal axes of the cigarettes (2).

9. A device according to Claim 7, **characterised in that** the active measuring volume (4) of the microwave planar sensor (3) reaches approximately 5 cm into the cigarettes (2).

10. A device according to Claim 6, **characterised in that** the microwave resonator (6) has a slot-shaped measuring volume (7) through which a partial stream of mutually adjacent cigarettes (2) can be guided in a direction (1, 5) which is perpendicular to the longitudinal extent of the cigarettes (2).

11. A device according to Claim 10, **characterised in that** the slot-shaped measuring volume (7) has a width which is somewhat greater than the diameter of the cigarettes (2).

12. A device according to Claim 10 or 11, **characterised in that** the microwave resonator (6) has two spaced semicylindrical resonators which enclose the slot (7) between them.

13. A device according to one of Claims 10 to 12, **characterised in that** the measuring volume (7) is substantially the same length as the tobacco rod of one cigarette in the direction of the longitudinal axes of the cigarettes (2).

## Revendications

1. Procédé de mesure de l'humidité de cigarettes avant l'emballage, à l'aide d'un résonateur à hyperfréquences, en faisant appel au décalage de la fréquence de résonance et à la variation de la largeur de la courbe de résonance du résonateur, **caractérisé en ce que** les cigarettes, disposées les unes à côté des autres ou les unes au-dessus des autres, sont entraînées verticalement par rapport à leur progression longitudinale à travers le champ à hyperfréquences du résonateur.

2. Procédé selon la revendication 1, **caractérisé en ce que** l'humidité d'au moins une partie importante de cigarettes est mesurée, la mesure étant effectuée à l'aide d'un capteur planaire depuis l'extrémité combustible des cigarettes serrées les unes à côté des autres et les unes au-dessus des autres.

3. Procédé selon la revendication 1, **caractérisé en ce que** l'humidité d'au moins une partie importante des cigarettes est mesurée, la mesure étant effectuée à l'aide d'un capteur planaire dont la surface de mesure est parallèle à l'axe longitudinal des cigarettes et au sens de déplacement de celles-ci

4. Procédé selon la revendication 1, **caractérisé en ce que** l'on mesure seulement l'humidité d'une partie du flux des cigarettes qui sont acheminées verticalement par rapport à leur axe longitudinal à travers un volume de mesure en forme de fente du résonateur.

5. Procédé selon l'une quelconque des revendications 1 à 4, **caractérisé en ce que** la densité de tassement du tabac à l'intérieur de la cigarette est également mesurée.

6. Dispositif de réalisation du procédé selon l'une quelconque des revendications 1 à 5, **caractérisé en ce qu'**il comporte un résonateur à hyperfréquences et un convoyeur transportant les cigarettes (2) disposées les unes à côté des autres ou les unes au-dessus des autres, verticalement par rapport à leur progression longitudinale à travers le champ d'hyperfréquences.

7. Dispositif selon la revendication 6, **caractérisé en ce qu'**il comporte un capteur planaire hyperfréquences (3), dont la surface orientée parallèlement au sens du transport (1,5) des cigarettes (2) est agencée sur l'un des bords latéraux du convoyeur.

8. Dispositif selon la revendication 6, **caractérisé en ce qu'**il comporte un capteur planaire hyperfréquences (3), dont la surface est orientée parallèlement au sens du transport (1,5) des cigarettes (2) et parallèlement à l'axe longitudinal des cigarettes (2).

9. Dispositif selon la revendication 7, **caractérisé en ce que** le volume de mesure actif (4) du capteur planaire hyperfréquences (3) pénètre d'environ 5 cm dans les cigarettes (2).

10. Dispositif selon la revendication 6, **caractérisé en ce que** le résonateur hyperfréquences (6) comprend un volume de mesure (7) en forme de fente, à travers lequel une partie du flux de cigarettes (2) disposées les unes à côté des autres peut être guidée dans une direction (1, 5) qui est verticale par rapport à la progression longitudinale des cigarettes (2).

11. Dispositif selon la revendication 10, **caractérisé en ce que** le volume de mesure en forme de fente (7) présente une largeur légèrement supérieure au diamètre des cigarettes (2).

12. Dispositif selon l'une quelconque des revendications 10 ou 11, **caractérisé en ce que** le résonateur hyperfréquences (6) comprend deux résonateurs de forme demi-cylindrique espacés qui encerclent la fente (7).

13. Dispositif selon l'une quelconque des revendications 10 à 12, **caractérisé en ce que** le volume de mesure (7) a sensiblement la longueur du boudin de tabac d'une cigarette dans le sens de l'axe longitudinal des cigarettes.
